# EUROPÄISCHE PATENTANMELDUNG

(11) **EP 4 782 717 A1**
(43) Veröffentlichungstag der Anmeldung: **29.07.2026**
(21) Anmeldenummer: 25153845.0
(22) Anmeldetag: 24.01.2025
(51) Int. Cl.: F16F 15/02, B33Y 10/00, B33Y 50/00, B33Y 80/00, H02K 15/00

(54) **VERFAHREN ZUR HERSTELLUNG ANLAGENSPEZIFISCHER DÄMPFER- UND/ODER FEDERELEMENTE FÜR EINE ELEKTRISCHE MASCHINE**

(71) Anmelder: Innomotics GmbH, 90441 Nürnberg (DE)
(72) Erfinder: Bittner, Roland, 91522 Ansbach (DE); Hösle, Markus, 91058 Erlangen (DE)
(74) Vertreter: Michalski Hüttermann & Partner mbB

(57) **Zusammenfassung**

Vorgeschlagen wird ein Verfahren zur Herstellung anlagenspezifischer Dämpfer- und/oder Federelemente (6) für eine elektrische Maschine (4), wobei die elektrische Maschine (4) in einer technischen Anlage (1) verbaut ist, umfassend folgende Schritte:
a) Anordnen mindestens eines Messaufnehmers (10) an der elektrischen Maschine (4),
b) Aufnahme eines Schwingungsverhaltens der elektrischen Maschine (4) im Betrieb der elektrischen Maschine (4) durch den mindestens einen Messaufnehmer (10),
c) Zuführung von Messwerten des mindestens einen Messaufnehmers (10) an eine computerimplementierte Auswerteeinheit (12),
d) Erstellung von Fertigungsparametern durch die computerimplementierte Auswerteeinheit (12),
e) Weitergabe der Fertigungsparameter an ein Computerprogramm einer Fertigungsanlage (14), woraufhin die Fertigungsanlage (14) die anlagenspezifischen Dämpfer- und/oder Federelemente (6) auf Grundlage der Fertigungsparameter herstellt.

## Beschreibung

### BESCHREIBUNGSEINLEITUNG

Die Erfindung betrifft ein Verfahren zur Herstellung anlagenspezifischer Dämpfer- und/oder Federelemente für eine elektrische Maschine. Des Weiteren betrifft die Erfindung eine computerimplementierte Auswerteeinheit sowie ein System zur Herstellung anlagenspezifischer Dämpfer- und/oder Federelemente.

### STAND DER TECHNIK

Aus technologischer Sicht oder aus Gründen der Energieeffizienz ist es oftmals wichtig, elektrische Maschinen mit variabler Drehzahl betreiben zu können. Diese Maschinen treiben in der Regel eine Lastmaschine an. Die Drehzahl lässt sich oft einfach durch das Ansteuern eines Umrichters einstellen. Solche elektrischen Maschinen, deren Drehzahl im Betrieb veränderbar ist, werden häufig in großen industriellen Anwendungen eingesetzt, auch im Leistungsbereich über 1 MW. Einsatzgebiete sind zum Beispiel Walzwerke, Erzmühlen, Förderanlagen, Pumpen, Verdichter, U-Boot-Antriebe, POD-Antriebe, Bahnantriebe, Windkraftgeneratoren usw.

Bei größeren elektrischen Maschinen werden diese oft zusammen mit einem Stromrichter und/oder der jeweiligen Lastmaschine und/oder einer Antriebseinheit wie Rotorblättern einer Windkraftanlage auf einer Welle und einer gemeinsamen Tragkonstruktion, beispielsweise einem Rahmen, angeordnet. Nach der Montage wird die Maschine oder die Tragkonstruktion oder die Einheit aus elektrischer Maschine und Lastmaschine an ihren Bestimmungsort gebracht und dort auf einem entsprechenden Fundament verankert. Bei Windkraftanlagen befindet sich der Generator in einer Gondel. Bei einem Propellergondel- (POD-)Antrieb ist der Motor im POD untergebracht. Bei Bahnantrieben befindet sich die elektrische Maschine bzw. der Stromrichter in einer Lok, einem Triebkopf oder verteilt in den Wagenkästen.

Um die Maschinenanordnung ordnungsgemäß betreiben zu können, dürfen Schwingungen der elektrischen Maschine im gesamten Drehzahlbereich nur in einem bestimmten Ausmaß auftreten, beispielsweise unter Einhaltung der Grenzwerte nach DIN ISO 10816-3. Bei einem Einsatz in einem U-Boot verursachen Schwingungen Geräusche, die in dieser Anwendung zu vermeiden sind. Auch bei Stromrichtern sind entsprechende Schwingungen zu vermeiden.

Um sicherzustellen, dass Schwingungen im gesamten zulässigen Drehzahlbereich nur in einem bestimmten Ausmaß auftreten, wird die elektrische Maschine vom Hersteller entsprechend ausgelegt. Die Auslegung ist jedoch oft für eine Anordnung auf einem festen Fundament, beispielsweise nach DIN EN 60034-14 bestimmt. Die Rahmenkonstruktion, auf der die elektrische Maschine angeordnet ist, ist jedoch oft nicht so steif wie ein festes Fundament. Die Gründe hierfür können anlagenspezifischer und wirtschaftlicher Natur sein.

Aufgrund der unterschiedlichen Steifigkeit der Rahmenkonstruktion ändert sich das Schwingungsverhalten der elektrischen Maschine im Vergleich zu einer Anordnung auf einem massiven Fundament. Das Schwingungsverhalten kann sich auch durch eine Änderung der Last oder des Antriebselements für einen Generator ändern. Ebenso kann sich das Schwingungsverhalten durch eine Änderung der Umgebungstemperatur verändern. Temperaturänderungen treten beispielsweise bei Windkraftanlagen oder Unterseebooten bzw. Schiffen auf.

Das Schwingungsverhalten kann insbesondere durch Federn oder durch eine Kombination von Dämpfern und Federn beeinflusst werden.

Es ist grundsätzlich möglich, elektrische Maschinen so zu konstruieren, dass sie auch auf einer Rahmenkonstruktion die gewünschten Schwingungseigenschaften aufweisen. Da sich Rahmenkonstruktionen jedoch voneinander unterscheiden, müsste jede Maschinenanordnung individuell ausgelegt und abgestimmt werden. Eine Erhöhung der Steifigkeit kann beispielsweise durch mehr Materialeinsatz für das Gehäuse oder den Stator der Maschine erreicht werden. Dies erhöht jedoch das Gewicht und die Kosten und kann in bestimmten Einsatzbereichen nachteilig sein.

Daher kann der von den Herstellern vorgesehene Drehzahlbereich der Maschine nur vollständig genutzt werden, wenn sie auf einem massiven Fundament installiert ist. Bei einer Installation auf einem normalen Fundament oder einer Rahmenkonstruktion können in bestimmten Drehzahlbereichen unzulässige Schwingungen auftreten. Diese Bereiche müssen entweder vollständig vermieden oder nur kurzzeitig durchlaufen werden, was je nach Anwendung akzeptabel oder problematisch sein kann.

Es gibt verschiedene Ansätze zur Reduzierung unerwünschter Schwingungen.

Aus der DE 10 2016 103 579 A1 ist bekannt, verschiedene Störgrößen, die ein Element zu Schwingungen anregen können, zu separieren.

Aus der WO 2005/017 386 A2 ist bekannt, unerwünschte Schwingungen aktiv zu kompensieren. Der WO 97/36122 A2 ist ein ähnlicher Offenbarungsgehalt zu entnehmen.

Aus der WO 2006/106 134 A1 ist bekannt, eine elektrische Maschine auf einem Tragrahmen anzuordnen und den Tragrahmen gegenüber einem Rumpf eines Schiffes an mehreren Stellen mittels aktiver Schwingungsdämpfer abzustützen.

Aus der JP 2014-020 477 A ist eine auf einer Tragkonstruktion angeordnete elektrische Maschine bekannt, wobei im Zwischenraum zwischen der Tragkonstruktion und einem Fundament ein passiver Schwingungstilger angeordnet ist. Der JP 2017-057 881 A ist ein ähnlicher Offenbarungsgehalt zu entnehmen.

Aus der FR 2 986 842 A1 ist eine Vorrichtung mit Elektromagneten bekannt, die an zwei Stützflächen oder elastischen Bolzen befestigt sind und von einem Mehrfrequenz-Oberschwingungsregler gesteuert werden. Die Elektromagnete verwenden eine Magnetspule mit weniger Wirbeln. Eine algorithmische Einheit stabilisiert die erzeugte Leistung, um mechanische Kopplungen zu kompensieren, die Kopplungskorrektur aufgrund von Nichtlinearitäten der elastischen Bolzen und die Korrektur der zeitlichen Entwicklung der Eigenschaften physikalischer Komponenten. Die algorithmische Einheit steuert Aktionen, die auf die Elektromagnete angewendet werden.

Zusammenfassend lässt sich sagen, dass beim beschriebenen Stand der Technik vor der Lieferung der Maschine bekannt sein muss, welches Schwingungsverhalten zu erwarten ist, oder aufwändige aktive Schwingungsdämpfer vorgesehen werden müssen.

Ausgehend vom zuvor beschriebenen Stand der Technik und dem zuvor beschriebenen Problem, liegt der Erfindung die Aufgabe zugrunde, unerwünschte Schwingungen bei einer elektrischen Maschine mit Hilfe anlagenspezifischer Dämpfer- und/oder Federelemente zu reduzieren und eine schnelle Nachrüstung bei Umbauten oder Standortwechseln der elektrischen Maschinen zu ermöglichen.

### LÖSUNG DER AUFGABE

Diese Aufgabe wird gelöst durch ein Verfahren zur Herstellung anlagenspezifischer Dämpfer- und/oder Federelemente für eine elektrische Maschine mit den Merkmalen des Anspruchs 1. Außerdem wird die Aufgabe gelöst durch eine computerimplemen-tierte Auswerteeinheit gemäß Anspruch 13 sowie durch ein System zur Herstellung anlagenspezifischer Dämpfer- und/oder Federelemente gemäß Anspruch 14. Vorteilhafte Weiterbildungen ergeben sich aus den abhängigen Ansprüchen.

### BESCHREIBUNG DER ERFINDUNG

Bei dem erfindungsgemäßen Verfahren zur Herstellung anlagenspezifischer Dämpfer- und/oder Federelemente für eine elektrische Maschine, wobei die elektrische Maschine in einer technischen Anlage verbaut ist, wird zunächst mindestens ein Messaufnehmer an der elektrischen Maschine angeordnet. Anschließend wird das Schwingungsverhalten der elektrischen Maschine im Betrieb der elektrischen Maschine durch den mindestens einen Messaufnehmer aufgenommen und Messwerte des mindestens einen Messaufnehmers an eine computerimplementierte Auswerteeinheit zugeführt. Die computerimplementierte Auswerteeinheit erstellt daraufhin Fertigungsparameter, welche an ein Computerprogramm einer Fertigungsanlage weitergegeben werden, woraufhin die Fertigungsanlage die anlagenspezifischen Dämpfer- und/oder Federelemente auf Grundlage der Fertigungsparameter herstellt.

Elektrische Maschinen mit veränderbarer Drehzahl werden häufig in industriellen Anwendungen eingesetzt, insbesondere im Leistungsbereich über 1 MW. Typische Einsatzgebiete sind Walzwerke, Erzmühlen, Förderanlagen, Pumpen, Verdichter, U-Boot-Antriebe, POD-Antriebe, Bahnantriebe und Windkraftgeneratoren. Diese Maschinen können sowohl als Motoren als auch als Generatoren fungieren.

Der Messaufnehmer kann so konstruiert sein, dass zwischen zwei Hauptplatten Sensorelemente angebracht sind. Diese Sensorelemente erfassen vorzugsweise vertikale Bewegungen und/oder (mechanische) Schwingungen, die während des Betriebs der elektrischen Maschine auftreten. Beispiele für solche Sensorelemente sind Beschleunigungs- oder Geschwindigkeitssensoren. Auch Vibrations- oder Temperatursensoren können verwendet werden, deren Signale zusammen mit anderen Anlagendaten gespeichert und verknüpft werden, um festzustellen, unter welchen Bedingungen und durch welche Einflüsse Vibrationen entstehen und wie sie vermieden werden können. Sensorelemente können am Stator, Gehäuse, Fundament der Maschine, an der Tragstruktur oder an einer Anlagenkomponente wie einer Gondel einer Windkraftanlage, der Hülle eines U-Bootes oder dem Wagenkasten eines Zuges angebracht sein.

Anlagenspezifische Dämpfer- und/oder Federelemente können dämpfende und/oder federnde Eigenschaften haben. Im einfachsten Fall sind alle eingesetzten Dämpfer- und/oder Federelemente gleichartig. Es kann jedoch vorteilhaft sein, unterschiedliche Dämpferelemente zu verwenden.

Das Verfahren oder die Verwendung eines anlagenspezifischen Dämpfer- und/oder Federelements kann nicht nur in Verbindung mit einer elektrischen Maschine, sondern auch mit einem Stromrichter erfolgen. Ein Stromrichter kann beispielsweise eine Leistungshalbleitereinheit und eine Regelungseinheit umfassen, die getrennt voneinander betrachtet werden können.

Alternativ können beide Funktionseinheiten in einer baulichen Einheit integriert sein, deren Schwingungsverhalten als Ganzes betrachtet wird. Der Stromrichter erzeugt Schwingungen oder ist diesen ausgesetzt. Durch den Einsatz von Austauschelementen können die Schwingungen des Stromrichters verändert werden, um ihn beispielsweise von den Schwingungen einer Anlage zu entkoppeln. Dies kann den Stromrichter und/oder die Anlage schützen, insbesondere wenn es sich bei der Anlage um ein Unterseeboot handelt, dessen Hülle durch die Schwingungen des Stromrichters beeinflusst werden könnte.

Im Rahmen der Erfindung umfassen Fertigungsparameter sowohl Konstruktionsparameter als auch weitere für die Herstellung der Dämpfer- und/oder Federelemente notwendige Parameter. Die Konstruktionsparameter sind somit ein Teil der Fertigungsparameter. Die Konstruktionsparameter umfassen beispielsweise Maße und Toleranzen eines Bauteils, die Materialauswahl, Form und Geometrie oder Anforderungen, die das Dämpfer- und/oder Federelement erfüllen muss, wie z.B. Belastbarkeit oder Flexibilität. Die Fertigungsparameter umfassen die Konstruktionsparameter und weitere für den Herstellungsprozess spezifische Kennwerte, die sich insbesondere auf die Bedingungen und Einstellungen, die während des Herstellungsprozesses verwendet werden, beziehen. Diese können beispielsweise die Temperatur, bei der ein Materialien verarbeitet werden soll, der Druck, der während der Fertigung angewendet wird, die Geschwindigkeit von Maschinen oder Werkzeugen oder Eigenschaften wie Viskosität oder Härte des verwendeten Materials umfassen.

Im Rahmen einer vorteilhaften Weiterbildung der Erfindung ist das Verfahren derart ausgestaltet, dass die computerimplementierte Auswerteeinheit zunächst Konstruktionsparameter auf Grundlage der ermittelten Messwerte erstellt, die anlagenspezifischen Dämpfer- und/oder Federelemente auf Grundlage der Konstruktionsparameter konfiguriert und die Fertigungsparameter mittels der Konstruktionsparameter erstellt. Zur Unterstützung bzw. zur Erledigung dieser vorher beschriebenen Schritte kann auf der computerimplementierten Auswerteeinheit ein Konstruktionsprogramm implementiert sein. Das Konstruktionsprogramm kann aber auch auf einer externen Recheneinheit oder einer Recheneinheit auf der technischen Anlage implementiert und mit der computerimplementierten Auswerteeinheit verbunden sein.

Vorzugsweise ist das Verfahren derart ausgestaltet, dass die Fertigungsanlage als eine additive Fertigungsanlage ausgebildet ist. Beim additiven Fertigungsverfahren, auch als 3D-Druck bekannt, wird ein Bauteil durch Zufügen von Material erzeugt. Hierdurch ist es möglich, passende Dämpfer- und/oder Federelemente spezifisch, durch die Wahl der Materialien, Strukturen und Dimensionen, für den Anwendungsfall zu schaffen. Es kann jedes Dämpfer- und/oder Federelement individuell angepasst gefertigt werden. Die additive Fertigungsanlage kann insbesondere am Einsatzort der elektrischen Maschine betrieben werden, wodurch die Flexibilität in der Fertigung steigt.

Das Verfahren kann vorteilhafterweise dazu ausgebildet sein, dass mindestens ein Messaufnehmer in die anlagenspezifischen Dämpfer- und/oder Federelemente integriert wird. Der mindestens eine Messaufnehmer wird also in die anlagenspezifischen Dämpfer- und/oder Federelemente eingearbeitet und ist ein Teil des Dämpfer- und/oder Federelementes. Hierdurch kann die Wirksamkeit der anlagenspezifischen Dämpfer- und/oder Federelemente während des Betriebs der technischen Anlage fortlaufend überwacht und Verschleiß festgestellt werden. Statt des gesamten Messaufnehmers können auch nur die Sensorelemente in die anlagenspezifischen Dämpfer- und/oder Federelemente integriert werden.

Vorzugsweise ist das Verfahren derart ausgestaltet, dass die computerimplementierte Auswerteeinheit anhand einer an die computerimplementierte Auswerteeinheit angebundenen Datenbank mittels der ermittelten Messwerte eine Prüfung vornimmt, ob bereits passende Dämpfer- und/oder Federelemente vorhanden sind, deren Fertigungsparameter übernommen werden können und/oder aus einer vorgegebenen Menge von Dämpfer- und/oder Federelementen diejenigen, die für den jeweiligen Maschinentyp, Maschinengewicht, Fundament, Betriebsarten notwendig sind, um das Schwingungsverhalten zu verändern, heraussucht und die Fertigungsparameter an die computerimplementierte Auswerteeinheit weitergibt.

Anstelle der Fertigungsparameter kann die angebundene Datenbank auch Konstruktionsparameter an die computerimplementierte Auswerteeinheit liefern. Die computerimplementierte Auswerteeinheit ermittelt anschließend aus den Konstruktionsparametern die Fertigungsparameter.

Vorzugsweise kann eine künstliche Intelligenz bei der Auswahl der anlagenspezifischen Dämpfer- und/oder Federelemente unterstützen. Die künstliche Intelligenz kann beispielsweise mit Daten, insbesondere Messdaten und Spezifikationsdaten von anderen Dämpfer- und/oder Federelementen, trainiert werden und aus diesen Daten mit Vorschlägen zur Parametrierung der passenden Dämpfer- und/oder Federelemente für den vorhandenen Anwendungsfall unterstützen. Darüber hinaus ist es möglich, das Verhalten der technischen Anlage, der elektrischen Maschine, der Dämpfer- und/oder Federelemente und/oder von Betriebszuständen zu simulieren. Derartige Simulationen können mit in die Auswahl der passenden Dämpfer- und/oder Federelemente integriert werden. Mittels eines digitalen Zwillings der elektrischen Maschine bzw. der technischen Anlage kann die Anlage und insbesondere das Schwingungsverhalten abgebildet und es können beispielsweise vorab kritische Frequenzen ermittelt und für diese Frequenzen passende Dämpfer- und/oder Federelemente errechnet werden.

Im Rahmen einer vorteilhaften Weiterbildung der Erfindung umfassen die Fertigungsparameter unter anderem ein Material, eine Struktur und/oder Abmessungen der Dämpfer- und/oder Federelemente. Die Fertigungsparameter werden an eine Fertigungsanlage, beispielsweise einer additiven Fertigungsanlage übermittelt, die die anlagenspezifischen Dämpfer- und/oder Federelemente aus den erforderlichen Materialen, den Strukturen und Dimensionen schafft. Materialien können beispielsweise Kunststoffe, Keramiken, Stähle, Eisen und/oder Kombinationen aus verschiedenen Materialien umfassen. Mögliche Strukturen sind beispielsweise ein Vollmaterial, eine Wabenstruktur, eine Stegstruktur, eine geometrische Form wie ein Kreis, eine Kugel, ein Quader, usw.

Vorzugsweise ist das Verfahren derart ausgestaltet, dass die anlagenspezifischen Dämpfer- und/oder Federelemente im Verbindungsbereich zwischen der technischen Anlage und der elektrischen Maschine eingebaut werden.

Vorteilhafterweise ist das Verfahren derart ausgestaltet, dass die computerimplementierte Auswerteeinheit kontinuierlich, mit Hilfe der Messwerte des mindestens einen Messaufnehmers, überprüft, ob die anlagenspezifischen Dämpfer- und/oder Federelemente gewartet oder gewechselt werden müssen. Hierzu werden im Vorfeld Schwellwerte festgelegt. Werden diese unter- oder überschritten, kann die computerimplementierte Auswerteeinheit beispielsweise einen Hinweis an den Maschinenbediener geben mit der Aufforderung, dass die anlagenspezifischen Dämpfer- und/oder Federelemente gewartet oder gewechselt werden müssen. Ebenfalls können über eine an die computerimplementierte Auswerteeinheit angebundene Datenbank historische Messwerte bei der Festlegung der Schwellwerte herangezogen werden. Hierbei wird ersichtlich, bei welchen Werten es in der Vergangenheit bei der elektrischen Maschine zu Problemen gekommen ist. Die Schwellwerte können dann dementsprechend ausgewählt bzw. angepasst werden.

Das Verfahren kann vorteilhafterweise dazu ausgebildet sein, dass die elektrische Maschine eine dynamoelektrische Maschine und/oder einen Stromrichter umfasst.

Vorteilhafterweise ist das Verfahren derart ausgestaltet, dass die hergestellten anlagenspezifischen Dämpfer- und/oder Federelemente als Austauschelemente verwendet werden und bereits an der elektrischen Maschine eingesetzte Dämpfer- und/oder Federelemente ersetzen. Vorzugweise werden die Austauschelemente eingesetzt, ohne die Position der elektrischen Maschine zu verändern. Die elektrische Maschine kann demnach am Aufstellungsort verbleiben und muss beispielsweise nicht angehoben werden. Der Austausch eines oder mehrerer Austauschelemente kann beispielsweise im Stillstand oder im Betrieb der elektrischen Maschine erfolgen. Auch können die hergestellten anlagenspezifischen Dämpfer- und/oder Federelemente parallel zu bestehenden Federanordnungen eingesetzt werden. Die Dämpfer- und/oder Federelemente können auch symmetrisch oder asymmetrisch angeordnet sein. Zudem können die Dämpfer- und/oder Federelemente parallel oder seriell mechanisch gekoppelt sein. Es kann sich somit eine Kopplung paralleler oder serieller Art unterschiedlicher Dämpfer- und/oder Federelemente ergeben. Insbesondere können die Dämpferelemente konzentrisch zu den jeweiligen Federelementen angeordnet sein.

Die elektrische Maschine kann unterschiedliche Aufnahmepunkte für Dämpfer- und/oder Federelemente aufweisen, wobei die Aufnahmepunkte für Dämpfer- und/oder Federelemente durch derartige Dämpfer- und/oder Federelemente belegbar sind oder freigehalten werden können. Ein Dämpfer- und/oder Federelement kann beispielsweise durch Einschrauben, Einpressen, Einlegen oder ähnliche bekannte Methoden positioniert und/oder durch Passsitz, Formsitz, Spannsitz, Kleben, Bolzen oder ähnliche bekannte Methoden in seiner Position gehalten werden. Dabei ist vorzugsweise zumindest ein Dämpfer- und/oder Federelement leicht zugänglich. Durch die leichte Zugänglichkeit kann das Schwingungsverhalten der elektrischen Maschine schnell angepasst werden. Befindet sich das Austauschelemente beispielsweise zwischen dem Gehäuse der elektrischen Maschine und dem Stator, so ist dieses vorteilhaft von außerhalb des Gehäuses zugänglich. Dies erfolgt beispielsweise durch Öffnungen im Gehäuse der elektrischen Maschine und/oder der technischen Anlage, die insbesondere im Betrieb der elektrischen Maschine verschließbar sind.

Im Rahmen einer vorteilhaften Weiterbildung der Erfindung ist die computerimplementierte Auswerteeinheit auf einer Recheneinheit der elektrischen Maschine oder der technischen Anlage oder auf einer externen Recheneinheit, welche mit der elektrischen Maschine oder der technischen Anlage verbunden ist, implementiert.

Vorzugsweise ist das Verfahren derart ausgestaltet, dass das Schwingungsverhalten im Betrieb der elektrischen Maschine zwischen dem Fundament und der Rahmenkonstruktion der elektrischen Maschine und/oder zwischen einem Gehäuse der elektrischen Maschine und einem Stator der elektrischen Maschine erfasst wird. Es ist sinnvoll, Schwingungen dort zu erfassen, wo sie entstehen. Das bedeutet, dass die Messaufnehmer in der Nähe der Stellen platziert werden sollten, an denen die Schwingungen auftreten. Dies hilft dabei, genaue und nützliche Daten zu sammeln, um Probleme frühzeitig zu erkennen und gezielt zu beheben. Hierdurch wird die Zuverlässigkeit und Lebensdauer der Maschine erhöht und die anlagenspezifischen Dämpfer- und/oder Federelemente können genauer für die gesamte Anlage ausgelegt werden. Zusätzlich zu den vorher beschriebenen Stellen wäre es auch möglich, Schwingungen beispielsweise an rotierenden Anlagenelementen wie Lagerstellen, Antriebswellen und/oder Getrieben zu erfassen. Um die anlagenspezifischen Dämpfer- und/oder Federelemente bestmöglich auslegen zu können, erfolgt die Erfassung des Schwingungsverhaltens insbesondere im gesamten Drehzahlbereich.

Die zuvor formulierte technische Aufgabe wird zudem gelöst durch eine computerimplementierte Auswerteeinheit, die dazu ausgebildet ist, Messwerte zu empfangen, Fertigungsparameter zu erstellen und die Fertigungsparameter an ein Computerprogramm einer Fertigungsanlage weiterzugeben.

Ebenfalls wird die zuvor formulierte technische Aufgabe durch ein System zur Herstellung anlagenspezifischer Dämpfer- und/oder Federelemente, wobei die elektrische Maschine in einer technischen Anlage verbaut ist, umfassend die elektrische Maschine, mindestens einen an der elektrischen Maschine angeordneten Messaufnehmer und eine Recheneinheit, auf der eine computerimplementierte Auswerteeinheit, die wie zuvor erläutert ausgebildet ist, implementiert ist, gelöst.

### FIGURENBESCHREIBUNG

Im Folgenden wird die Erfindung anhand der in den Figuren dargestellten Ausführungsbeispielen näher beschrieben und erläutert. Hierbei zeigen in schematischer Darstellung:
- FIG 1: eine beispielhafte Anordnung einer technischen Anlage in einer Seitenansicht,
- FIG 2: die beispielhafte Anordnung einer technischen Anlage von FIG 1 in einem Querschnitt,
- FIG 3: eine beispielhafte Darstellung eines Dämpfer-Federelements in einem Querschnitt,
- FIG 4: Verfahrensschritte zur Herstellung anlagenspezifischer Dämpfer- und/oder Federelemente für eine elektrische Maschine,
- FIG 5 a) bis h): unterschiedliche Ausgestaltungen von Dämpfer- und/oder Federelementen im Querschnitt.

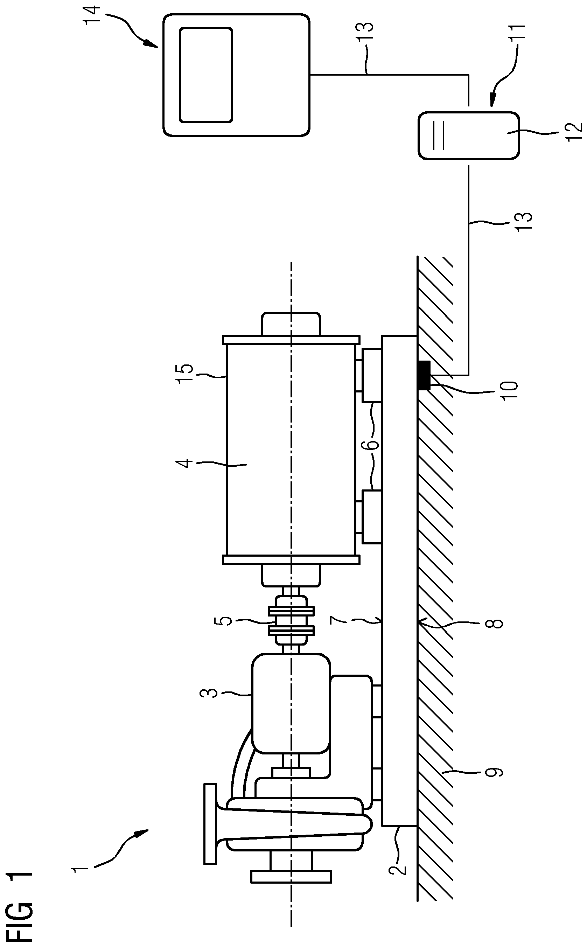

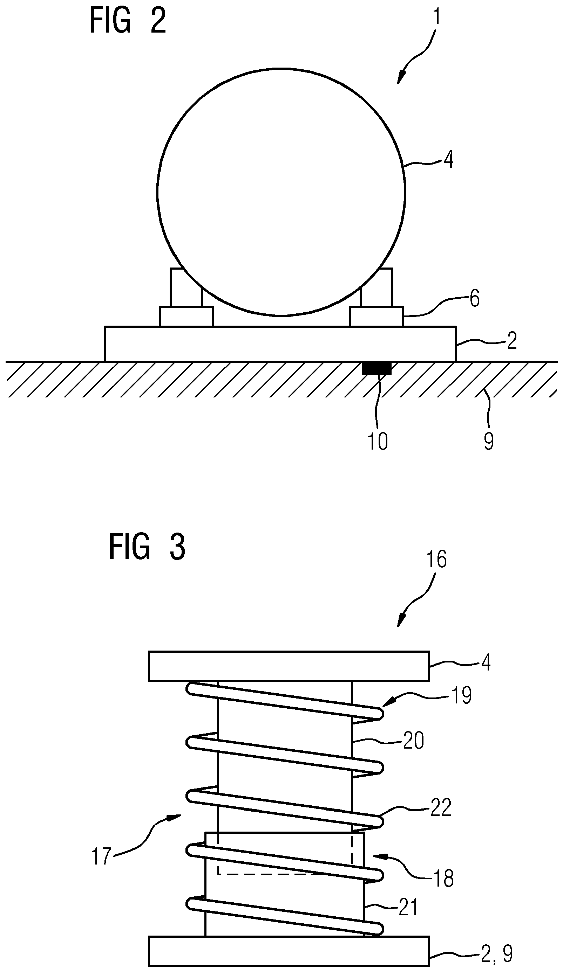

Wie in den FIG 1 und 2 dargestellt, verfügt eine technische Anlage 1 über eine Rahmenkonstruktion 2. Diese besteht üblicherweise aus Stahlträgern, die beispielsweise ein Doppel-T-Profil aufweisen können. Auf der Rahmenkonstruktion 2 ist eine Lastmaschine 3 montiert, die beispielsweise eine Pumpe, ein Gebläse, ein Lüfter oder ein Verdichter sein kann. Die Lastmaschine 3 wird von einer elektrischen Maschine 4 angetrieben, die über eine Kupplung 5 mit der Lastmaschine 3 verbunden ist.

Die elektrische Maschine 4 ist mittels mehrerer Dämpfer- und/oder Federelemente 6 auf der Rahmenkonstruktion 2 befestigt. Beispielsweise sind vier Dämpfer- und/oder Federelemente 6 vorhanden, die so angeordnet sind, dass sie ein Rechteck bilden. Es können jedoch auch mehr oder weniger Dämpfer- und/oder Federelemente 6 vorhanden sein, die unterschiedlich angeordnet sind.

Die Lastmaschine 3 kann direkt auf der Rahmenkonstruktion 2 befestigt sein, also ohne Dämpfer- und/oder Federelemente 6, wie sie für die Befestigung der elektrischen Maschine 4 vorgesehen sind. Alternativ kann auch die Lastmaschine 3 über derartige Dämpfer- und/oder Federelemente 6 auf der Rahmenkonstruktion 2 befestigt sein.

Die Rahmenkonstruktion 2 hat eine horizontal ausgerichtete Oberseite 7 und eine ebenso horizontal ausgerichtete Unterseite 8. Mit der Unterseite 8 liegt die Rahmenkonstruktion 2 auf einem Fundament 9 auf, an dem sie beispielsweise durch Verschraubungen befestigt ist. Auf der Oberseite 7 sind die Lastmaschine 3 und die elektrische Maschine 4 befestigt. Diese sind beispielsweise mit der Rahmenkonstruktion 2 verschraubt.

Zwischen dem Fundament 9 und der Rahmenkonstruktion 2 der elektrischen Maschine 4 ist mindestens ein Messaufnehmer 10 angeordnet. Der Messaufnehmer 10 kann so konstruiert sein, dass zwischen zwei Hauptplatten Sensorelemente angebracht sind. Diese Sensorelemente erfassen vorzugsweise vertikale Bewegungen und/oder Schwingungen, die während des Betriebs der elektrischen Maschine 4 auftreten. Es können beispielsweise Beschleunigungs-, Geschwindigkeits-, Vibrations- oder Temperatursensoren verwendet werden.

Der mindestens eine Messaufnehmer 10 ist an eine Recheneinheit 11 angebunden, auf der eine computerimplementierte Auswerteeinheit 12 implementiert ist. Die Anbindung 13 erfolgt beispielsweise durch eine kabelgebundene Verbindung, wie z.B. auf Basis von Ethernet, oder durch eine kabellose Verbindung, wie z.B. Bluetooth oder 5G. Der Messaufnehmer 10 führt die von ihm erfassten Messwerte, also im Ergebnis die erfassten vertikalen Bewegungen bzw. Schwingungen der elektrischen Maschine 4, der computerimplementierten Auswerteeinheit 12 zu. Die computerimplementierte Auswerteeinheit 12 bzw. die Recheneinheit 11 ist an eine Fertigungsanlage 14 angebunden. Die Anbindung 13 erfolgt beispielsweise über eine kabelgebundene oder kabellose Verbindung. Die computerimplementierte Auswerteeinheit 12 kann hierdurch Fertigungsparameter an die Festungsanlage 14 weitergeben.

In FIG 3 wird beispielhaft ein Dämpfer-Federelement 16 gezeigt. Das Dämpfer-Federelement 16 umfasst eine Stützstruktur 17, welche aus einem dämpfenden Teil 18 sowie aus einem federnden Teil 19 besteht. Der dämpfende Teil 18 umfasst ein Oberteil 20 und ein Unterteil 21. Das Oberteil 20 ist an der elektrischen Maschine 4 und das Unterteil 21 am Fundament 9 bzw. an der Rahmenkonstruktion 2 der elektrischen Maschine 4 befestigt. Oberteil 20 und Unterteil 21 sind axial ineinander angeordnet und in Richtung der gemeinsamen Achse bewegbar. Zwischen Oberteil 20 und Unterteil 21 ist ein Dämpfungsmittel, beispielsweise ein Fluid, wie Öl, Gas oder Luft, vorhanden. Das Oberteil 20 ist mit Ventilen ausgestattet, die den Fluss des Dämpfungsmittels im Unterteil 21 regulieren. Wenn das Oberteil 20 sich bewegt, wird das Dämpfungsmittel durch die Ventile gedrückt. Die Ventile bieten Widerstand gegen den Fluss des Dämpfungsmittels, was die Bewegung des Kolbens verlangsamt und somit die Schwingungen dämpft. Umgeben wird der dämpfende Teil 18 von einem federnden Teil 19, welcher eine Feder 22 umfasst, welche im oberen Bereich an der elektrischen Maschine 4 und im unteren Bereich an dem Fundament 9 bzw. an der Rahmenkonstruktion 2 anschließt. Der federnde Teil 19 muss den dämpfenden Teil 18 aber nicht zwangsläufig umschließen. Es ist auch beispielsweise denkbar, dass der federnde Teil 19 neben dem dämpfenden Teil 18 angeordnet ist. Ebenfalls ist es möglich, dass nur der federnde Teil 19 oder nur der dämpfende Teil 18 zum Ausgleich von Schwingungen an der elektrischen Maschine 4 ausreichend ist und somit einer der beiden Teile nicht vorhanden ist.

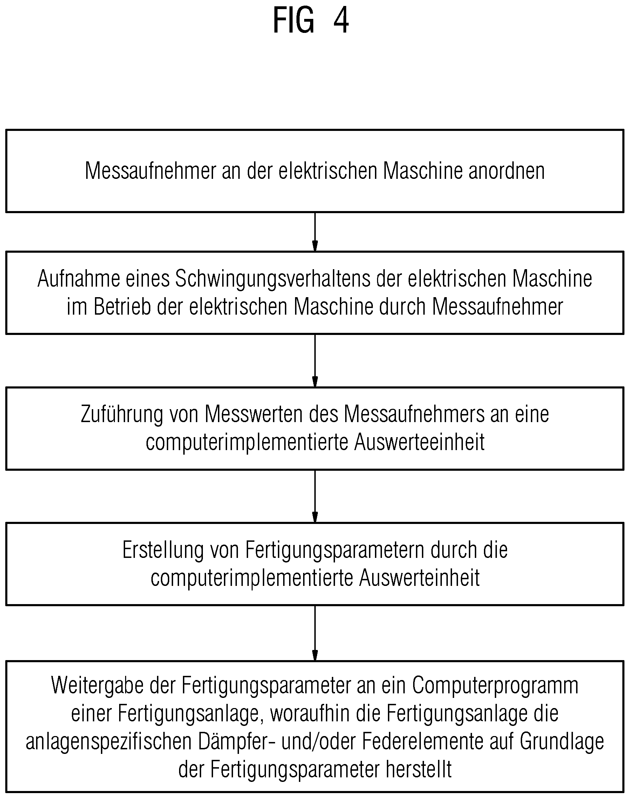

In FIG 4 ist ein prozessualer Ablauf zur Herstellung anlagenspezifischer Dämpfer- und/oder Federelemente 6 für eine elektrische Maschine 4 dargestellt. Die elektrische Maschine 4 ist in einer technischen Anlage 1 verbaut und umfasst folgende Schritte:
- Anordnen mindestens eines Messaufnehmers 10 an der elektrischen Maschine 4,
- Aufnahme eines Schwingungsverhaltens der elektrischen Maschine 4 im Betrieb der elektrischen Maschine 4 durch den mindestens einen Messaufnehmer 10,
- Zuführung von Messwerten des mindestens einen Messaufnehmers 10 an eine computerimplementierte Auswerteeinheit 12,
- Erstellung von Fertigungsparametern durch die computerimplementierte Auswerteeinheit 12,
- Weitergabe der Fertigungsparameter an ein Computerprogramm einer Fertigungsanlage 14, woraufhin die Fertigungsanlage 14 die anlagenspezifischen Dämpfer- und/oder Federelemente 6 auf Grundlage der Fertigungsparameter herstellt.

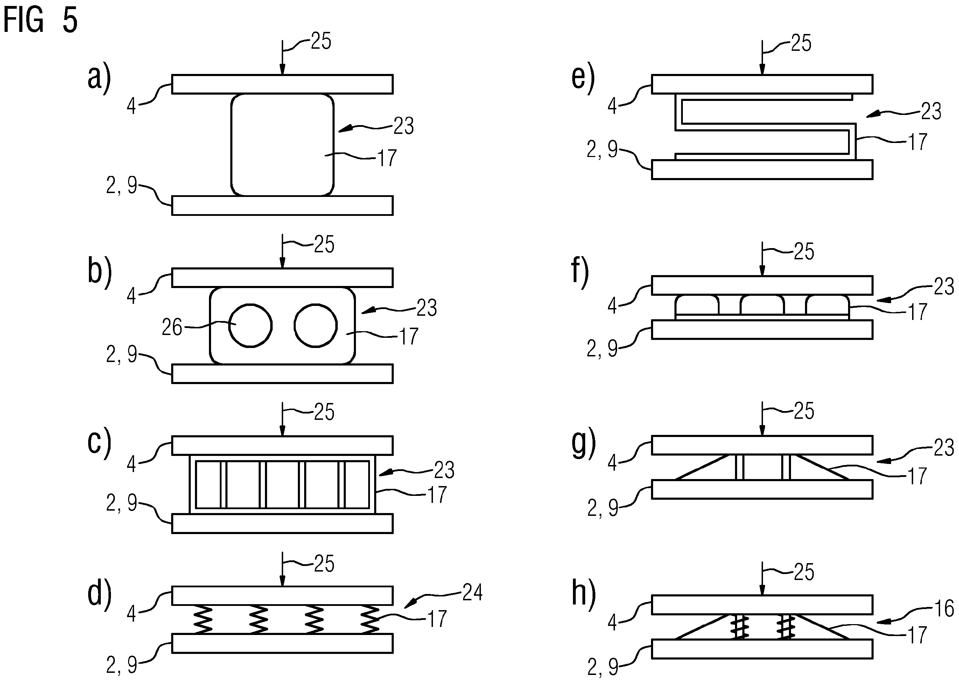

Die Darstellungen nach FIG 5 a) bis h) zeigen beispielhaft unterschiedliche Ausgestaltungen von Dämpfer- und/oder Federelementen 6 bezüglich ihrer zweidimensionalen Form im Querschnitt.

In FIG 5 a) ist beispielsweise ein Dämpferelement 23 so ausgestaltet, dass dessen Stützstruktur 17 quaderförmig, vorzugsweise aus einem nachgiebigen Material wie Schaumstoff oder Gummi, besteht. Das Dämpferelement 23 hat im oberen Bereich Kontakt zu der elektrischen Maschine 4 und im unteren Bereich Kontakt zum Fundament 9 bzw. zu der Rahmenkonstruktion 2 der elektrischen Maschine 4. Bei auftretenden Schwingungen 25 komprimiert sich das Dämpferelement 23 und die Schwingungen 25 können abgefangen bzw. gedämpft.

In FIG 5 b) ist eine weitere Ausgestaltung des in FIG 5 a) beschriebenen Dämpferelements 23 dargestellt. Die quaderförmig elastische Stützstruktur 17 weist im Inneren, vorzugsweise zwei zylinderförmige, von der Vorderseite zur Rückseite durchgehende Ausnehmungen 26 auf. Die Ausnehmungen 26 könnten aber auch quaderförmige oder andere Geometrien aufweisen. Durch die Ausnehmungen 26 wird die Nachgiebigkeit bzw. die Komprimierfähigkeit des Dämpferelements 23 erhöht.

In den FIG 5 c) bis h) werden beispielhaft weitere unterschiedliche Dämpfer- und/oder Federelemente 6 sowie deren Stützstrukturen 17 aufgezeigt.

### SCHLUSSBEMERKUNG

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: technische Anlage
- 2: Rahmenkonstruktion
- 3: Lastmaschine
- 4: elektrische Maschine
- 5: Kupplung
- 6: Dämpfer- und/oder Federelement
- 7: Oberseite
- 8: Unterseite
- 9: Fundament
- 10: Messaufnehmer
- 11: Recheneinheit
- 12: computerimplementierte Auswerteeinheit
- 13: Anbindung
- 14: Fertigungsanlage
- 15: Gehäuse
- 16: Dämpfer-Federelement
- 17: Stützstruktur
- 18: dämpfender Teil
- 19: federnder Teil
- 20: Oberteil
- 21: Unterteil
- 22: Feder
- 23: Dämpferelement
- 24: Federelement
- 25: Schwingungen
- 26: Ausnehmung

## Patentansprüche

1. Verfahren zur Herstellung anlagenspezifischer Dämpfer- und/oder Federelemente (6) für eine elektrische Maschine (4), wobei die elektrische Maschine (4) in einer technischen Anlage (1) verbaut ist, umfassend folgende Schritte:
a) Anordnen mindestens eines Messaufnehmers (10) an der elektrischen Maschine (4),
b) Aufnahme eines Schwingungsverhaltens der elektrischen Maschine (4) im Betrieb der elektrischen Maschine (4) durch den mindestens einen Messaufnehmer (10),
c) Zuführung von Messwerten des mindestens einen Messaufnehmers (10) an eine computerimplementierte Auswerteeinheit (12),
d) Erstellung von Fertigungsparametern durch die computerimplementierte Auswerteeinheit (12),
e) Weitergabe der Fertigungsparameter an ein Computerprogramm einer Fertigungsanlage (14), woraufhin die Fertigungsanlage (14) die anlagenspezifischen Dämpfer- und/oder Federelemente (6) auf Grundlage der Fertigungsparameter herstellt.

2. Verfahren nach Anspruch 1, bei dem die computerimplementierte Auswerteeinheit (12) zunächst Konstruktionsparameter auf Grundlage der ermittelten Messwerte erstellt, die anlagenspezifischen Dämpfer- und/oder Federelemente (6) auf Grundlage der Konstruktionsparameter konfiguriert und die Fertigungsparameter mittels der Konstruktionsparameter erstellt.

3. Verfahren nach Anspruch 1, bei dem die Fertigungsanlage (14) als eine additive Fertigungsanlage ausgebildet ist.

4. Verfahren nach Anspruch 1, bei dem mindestens ein Messaufnehmer (10) in die anlagenspezifischen Dämpfer- und/oder Federelemente (6) integriert wird.

5. Verfahren nach Anspruch 1, bei dem die computerimplementierte Auswerteeinheit (12) anhand einer an die computerimplementierte Auswerteeinheit (12) angebundenen Datenbank mittels der ermittelten Messwerte eine Prüfung vornimmt, ob bereits passende Dämpfer- und/oder Federelemente (6) vorhanden sind, deren Fertigungsparameter übernommen werden können und/oder aus einer vorgegebenen Menge von Dämpfer- und/oder Federelementen (6) diejenigen, die für den jeweiligen Maschinentyp, Maschinengewicht, Fundament, Betriebsarten notwendig sind, um das Schwingungsverhalten zu verändern, heraussucht und die Fertigungsparameter an die computerimplementierte Auswerteeinheit (12) weitergibt.

6. Verfahren nach einem der vorherigen Ansprüche, bei dem die Fertigungsparameter unter anderem ein Material, eine Struktur und/oder Abmessungen der Dämpfer- und/oder Federelemente (6) umfassen.

7. Verfahren nach Anspruch 1, bei dem die anlagenspezifischen Dämpfer- und/oder Federelemente (6) im Verbindungsbereich zwischen der technischen Anlage (1) und der elektrischen Maschine (4) eingebaut werden.

8. Verfahren nach Anspruch 7, bei dem die computerimplementierte Auswerteeinheit (12) kontinuierlich, mit Hilfe der Messwerte des mindestens einen Messaufnehmers (10), überprüft, ob die anlagenspezifischen Dämpfer- und/oder Federelemente (6) gewartet oder gewechselt werden müssen.

9. Verfahren nach Anspruch 1, bei dem die elektrische Maschine (4) eine dynamoelektrische Maschine und/oder einen Stromrichter umfasst.

10. Verfahren nach einem der vorherigen Ansprüche, bei dem die hergestellten anlagenspezifischen Dämpfer- und/oder Federelemente (6) als Austauschelemente verwendet werden und bereits an der elektrischen Maschine (4) eingesetzte Dämpfer- und/oder Federelemente (6) ersetzen.

11. Verfahren nach einem der vorherigen Ansprüche, bei dem die computerimplementierte Auswerteeinheit (12) auf einer Recheneinheit (11) der elektrischen Maschine (4) oder der technischen Anlage (1) oder auf einer externen Recheneinheit (11), welche mit der elektrischen Maschine (4) oder der technischen Anlage (1) verbunden ist, implementiert ist.

12. Verfahren nach Anspruch 1, bei dem das Schwingungsverhalten im Betrieb der elektrischen Maschine (4) zwischen dem Fundament (9) und der Rahmenkonstruktion (2) der elektrischen Maschine (4) und/oder zwischen einem Gehäuse (15) der elektrischen Maschine (4) und einem Stator der elektrischen Maschine (4) erfasst wird.

13. Computerimplementierte Auswerteeinheit (12), die dazu ausgebildet ist, Messwerte zu empfangen, Fertigungsparameter zu erstellen und die Fertigungspaarmeter an ein Computerprogramm einer Fertigungsanlage (14) weiterzugeben.

14. System zur Herstellung anlagenspezifischer Dämpfer- und/oder Federelemente (6), wobei die elektrische Maschine (4) in einer technischen Anlage (1) verbaut ist, umfassend die elektrische Maschine (4), mindestens einen an der elektrischen Maschine angeordneten Messaufnehmer (10) und eine Recheneinheit (11), auf der eine computerimplementierte Auswerteeinheit (12) implementiert ist, die gemäß Anspruch 13 ausgebildet ist.
